# FASCICULE DE BREVET EUROPEEN

(11) **EP 0 841 813 B1**
(45) Date de publication et mention de la délivrance du brevet: **30.06.2004**
(21) Numéro de dépôt: 97203433.4
(22) Date de dépôt: 05.11.1997
(51) Int. Cl.: H04N 7/173, H04N 5/44

(54) **Procédé pour la mise à jour du logiciel d'un récepteur vidéo**
Verfahren zum Aktualisieren der Programm-Ausstattung eines Videoempfängers
Method for updating the software of a video receiver

(30) Priorité: 12.11.1996 FR 9613757
(43) Date de publication de la demande: 13.05.1998
(73) Titulaire: Koninklijke Philips Electronics N.V., 5621 BA Eindhoven (NL)
(72) Inventeur: Koster, John, 75008 Paris (FR); Bosveld, Frank, 75008 Paris (FR)
(74) Mandataire: Charpail, François

(56) Documents cités:
- EP-A- 0 752 786
- WO-A-94/14284
- WO-A-94/24826
- WO-A-96/31982
- WO-A-96/34491
- US-A- 4 503 462
- US-A- 4 733 301
- US-A- 5 367 571
- US-A- 5 440 632

## Description

La présente invention comme décrit dans la revendication 1 concerne un procédé pour la mise à jour de logiciel, dans un récepteur vidéo muni de moyens pour traiter des signaux vidéo et des données numériques envoyés par un émetteur de télévision, et d'un microprocesseur relié par un premier bus à une mémoire de programme d'application de type ré-inscriptible, dans laquelle sont inscrites les instructions de base grâce auxquelles il peut fonctionner, procédé selon lequel, un logiciel neuf étant reçu par fractions successives, les fractions de logiciel reçues sont vérifiées une par une par le microprocesseur et stockées dans une mémoire vive jusqu'à ce que le nouveau logiciel soit complet et, à ce moment seulement, le nouveau logiciel est transféré dans la mémoire de programme d'application ré-inscriptible.

Elle concerne également un tel récepteur vidéo comme décrit dans la revendication 6 et un téléviseur comme décrit dans la revendiacation 7.

La mise à jour des logiciels peut être décidée par un fournisseur de programmes de télévision, lorsqu'une erreur a été détectée dans le logiciel des récepteurs, ou bien pour ajouter des nouvelles fonctions.

Alors que la plupart des instructions d'un logiciel neuf sont identiques à celles de l'ancien, il serait néanmoins surprenant que chacune des instructions du logiciel neuf ait exactement la même adresse que l'instruction correspondante dans le logiciel ancien. Donc le logiciel d'un récepteur, lorsqu'il est transformé seulement en partie, devient totalement inutilisable. En outre, la mise à jour du logiciel peut être interrompue, en cours de processus, pour différentes raisons. Il faut donc vérifier l'ensemble du nouveau logiciel avant de le mettre en place : c'est pourquoi il est stocké dans une mémoire vive jusqu'à complétude et, seulement alors, transféré dans la mémoire de programme, comme décrit dans le document WO 96/34491 (M. Ellis).

L'invention a notamment pour objet d'économiser de la mémoire vive.

A cet effet, les dits moyens de réception de signaux vidéo comprenant entre autres un module spécialisé de traitement vidéo numérique relié par un second bus à une mémoire vidéo spécialisée, c'est la mémoire vidéo du module spécialisé de traitement vidéo qui est utilisée en tant que mémoire vive pour stocker provisoirement les fractions de logiciel reçues.

De préférence, le passage des données entre le microprocesseur et la mémoire vidéo est assuré via le module spécialisé de traitement vidéo numérique.

Avantageusement, le processus d'acquisition d'un nouveau logiciel est initié pendant une période de veille du récepteur, la mise en service du récepteur est interdite pendant le transfert d'un nouveau logiciel dans la mémoire de programme d'application, et un message est affiché par le récepteur pendant le transfert d'un nouveau logiciel dans la mémoire de programme d'application.

Un récepteur selon l'invention, comprenant un module spécialisé de traitement vidéo numérique relié par un second bus à une mémoire vidéo, est muni de moyens pour faire transiter des données entre le premier bus et le second bus, et la dite mémoire vive est constituée par la mémoire vidéo du module spécialisé de traitement vidéo.

De préférence, le module spécialisé de traitement vidéo numérique est muni de moyens pour assurer un transit de données entre le premier bus et le second bus.

Avantageusement, le microprocesseur est muni de moyens pour initier le processus d'acquisition d'un nouveau logiciel pendant une période de veille du récepteur, de moyens pour interdire la mise en service du récepteur pendant le transfert d'un nouveau logiciel dans la mémoire de programme d'application, et de moyens pour afficher un message pendant le transfert d'un nouveau logiciel dans la mémoire de programme d'application.

Ces aspects de l'invention ainsi que d'autres aspects plus détaillés apparaîtront plus clairement grâce à la description suivante d'un mode de réalisation constituant un exemple non limitatif.

La figure unique représente schématiquement un récepteur vidéo.

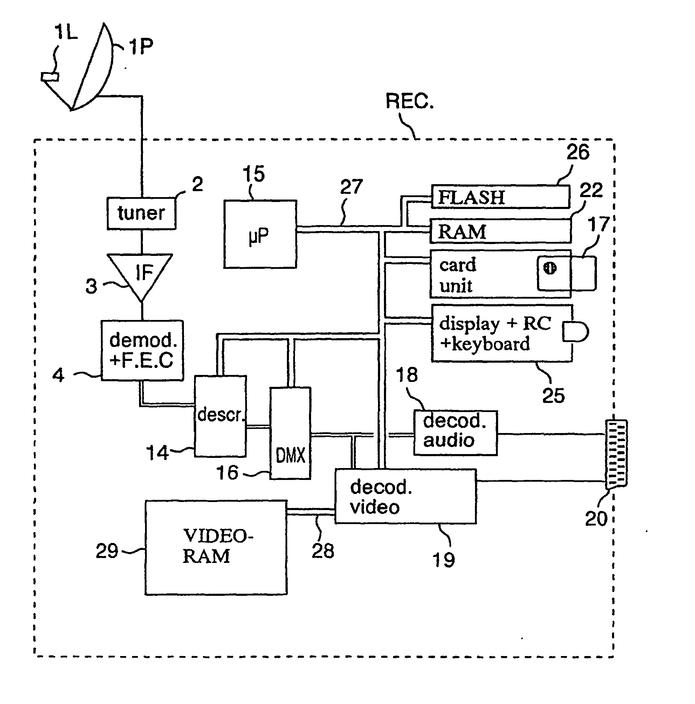

Le récepteur-décodeur REC représenté par la figure 1 est destiné à permettre l'accès à des programmes de télévision codés selon le standard MPEG-2. Il est clair que l'invention s'appliquerait également à d'autres types de récepteurs vidéo.

Le récepteur est connecté à une antenne parabolique 1P munie d'un module de transposition de fréquence 1L, et comprend un ensemble de réception satellite constitué d'un tuner 2, suivi d'un amplificateur à fréquence intermédiaire 3. Ensuite, le signal à fréquence intermédiaire est démodulé et certaines erreurs corrigées, dans un module 4, puis le signal est éventuellement désembrouillé dans un module de désembrouillage 14 relié à un lecteur de carte à puce 17. La carte à puce 17 fournit, de façon connue, des informations nécessaires au désembrouillage des émissions de télévision, telles qu'une clé de distribution, la référence d'un fournisseur, les caractéristiques d'un abonnement à un bouquet de programmes diffusé par un fournisseur, le type de l'embrouillage.

Le signal sortant du module de désembrouillage 14 est soumis à l'action d'un démultiplexeur 16 qui sépare les uns des autres différents programmes. Le signal sortant de ce démultiplexeur requiert d'être transformé en un signal analogique pour afficher une image sur un écran et appliquer le son à un haut-parleur. Cette transformation est effectuée dans un décodeur vidéo 19 et dans un décodeur de son 18. Ces décodeurs sont reliés à un connecteur 20 pour une connexion à un téléviseur classique. En variante, les éléments de la figure pourraient aussi être des éléments internes d'un téléviseur.

Les signaux vidéo traités dans le décodeur 19 sont, à l'entrée, sous forme numérique et peuvent être mémorisés au cours de leur traitement dans une mémoire vidéo 29 de grande capacité, capable par exemple d'emmagasiner plusieurs images. Cette mémoire est reliée au décodeur 19 par un bus 28 dédié.

Un microprocesseur 15 est relié, par un bus 27 qui est physiquement distinct du bus 28 :
. à une mémoire de programme d'application 26 dans laquelle sont inscrites les instructions de base grâce auxquelles le microprocesseur peut fonctionner,
. à une mémoire vive 22 pour stocker provisoirement des données,
. à un ensemble 25 comprenant un clavier de commande et/ou un récepteur de télécommande associé à un écran d'affichage de données,
. ainsi qu'au lecteur de la carte à puce 17.

Les instructions dans la mémoire de programme d'application 26, de type "flash", sont conservées à l'extinction du récepteur mais sont susceptibles d'être mises à jour. Pour ce faire, un logiciel neuf est envoyé "par air" c'est-à-dire par le canal de l'émission de télévision, l'envoi de diverses données numériques étant prévu dans le standard d'émission. Dans certains systèmes, il est prévu que des données peuvent être transmises au moyen d'une ligne téléphonique ceci n'est sans doute pas aussi satisfaisant que la transmission par air, mais l'invention peut s'y appliquer également. Le temps nécessaire pour la réception complète d'un logiciel par air est de l'ordre d'une minute, et peut être encore plus long si les conditions de réception sont défavorables. Pour améliorer la tolérance à d'éventuelles erreurs de transmission et pour faciliter l'acquisition par des récepteurs de capacité différente, le logiciel est envoyé par fractions ou blocs successifs, en alternance avec des images. Ce processus ne peut être mis en route, dans le récepteur, que dans les cas où ce dernier n'est pas susceptible de devoir décoder des images, typiquement lorsqu'il est en veille, de façon que le microprocesseur soit libre. Un logiciel complet peut avoir une taille allant jusqu'à un méga-octets : la mémoire de programme d'application 26 a une capacité d'un méga-octet. Le logiciel est transmis, par exemple, par blocs de quatre kilo-octets chacun.

La mise à jour du logiciel peut être interrompue pour différentes raisons, par exemple : parce que l'utilisateur a mis le récepteur en mode réception ou par suite d'une coupure de courant. Afin d'éviter le risque que le processeur travaille avec un logiciel en partie transformé, le nouveau logiciel est stocké dans une autre mémoire que la mémoire 26, jusqu'à ce qu'il soit complet et, à ce moment seulement, transféré d'un seul coup dans la mémoire 26. La mémoire vidéo 29 est utilisée ici pour le stockage provisoire. Comme le bus 28 est physiquement distinct du bus 27, le passage des données d'un bus à l'autre est réalisé via le décodeur 19.

Le fonctionnement est le suivant lorsque l'émetteur va envoyer un nouveau logiciel, une donnée numérique particulière indique ce fait. Le numéro de la version de logiciel en question est également fourni. Les données sont acquises par le décodeur 19 et transmises au microprocesseur. Lorsque la susdite donnée numérique particulière est reconnue, le pointeur de programme du microprocesseur est positionné à l'adresse, dans le logiciel ancien, des instructions traitant le processus de réception d'un nouveau logiciel. Le microprocesseur vérifie d'abord que la version de logiciel en question n'est pas déjà celle possédée par le récepteur. Chaque paquet d'un bloc de logiciel transmis au microprocesseur possède un codage de type signature, par exemple un codage cyclique à redondance ("CRC"), ce qui permet au microprocesseur de l'analyser et d'en vérifier la cohérence. Si le bloc paraît correct, il est renvoyé au décodeur 19 qui l'inscrit dans la mémoire 29, via le bus 28. Si un bloc n'est pas correct, le système attend la prochaine occurrence de transmission du même bloc. Lorsque tous les blocs ont été reçus correctement et stockés, le microprocesseur engage le processus de transfert vers la mémoire de programme d'application 26, ce transfert se faisant par le bus 28, le décodeur 19, et le bus 27, sous la commande du microprocesseur 15.

Si l'usager met en service le récepteur pendant la réception des données, le processus est interrompu. Il sera repris plus tard, lorsque le récepteur sera à nouveau en veille. Néanmoins, pendant le temps du transfert final vers la mémoire de programme d'application, il ne faut pas d'interruption. A cet effet, une fonction inhibe alors le récepteur de télécommande de l'ensemble 25 pour empêcher la mise en service du récepteur et, afin que l'utilisateur comprenne pourquoi son récepteur refuse de s'allumer, un message apparait à l'écran : par exemple "OPÉRATION EN COURS".
- 1 =: Parabolantenne mit LNB
- REC. =: Empfänger-Dekoder
- 3 =: Zwischenfrequenzverstärker
- 4 =: Demodulationmodul des Zwischenfrequenzsignals und faktulative Fehlerkorrektur
- 14 =: Entschlüsselungsmodul
- 15 =: Mikroprozessor
- 16 =: Demultiplexer
- 17 =: Chipkarten-Lesegerät
- 18 =: Tondekoder
- 19 =: Bilddekoder
- 20 =: Anschluss
- 22 =: Direktzugriffsspeicher
- 25 =: Anzeigebildschirm und Fernbedienung und Steuertastatur
- 26 =: Anwendungs-Programmspeicher
- 27 =: Sonderbus
- 28 =: Spezialbus
- 29 =: Bildspeicher

## Revendications

1. Procédé pour la mise à jour de logiciel, dans un récepteur vidéo muni de moyens pour traiter des signaux vidéo et des données numériques envoyés par un émetteur de télévision, et d'un microprocesseur (15) relié par un premier bus (27) à une mémoire de programme d'application de type ré-inscriptible (26), dans laquelle sont inscrites les instructions de base grâce auxquelles il peut fonctionner, lesdits moyens de traitement de signaux vidéo comprenant entre autres un décodeur vidéo numérique (19) relié par un second bus (28) à une mémoire vidéo spécialisée associée (29), procédé selon lequel, un logiciel neuf étant reçu par fraction successives, les fractions de logiciel reçues sont vérifiées une par une par le microprocesseur et stockées dans ladite mémoire video spécialisée associée qui est utilisée en tant que mémoire vive pour stocker provisoirement les fractions du logiciel reçues jusqu'à ce que le nouveau logiciel soit complet et, à ce moment seulement, le nouveau logiciel est transféré dans la mémoire d'application réinscriptible.

2. Procédé selon la revendication 1, **caractérisé en ce que** le passage des données entre le microprocesseur (15) et la mémoire vidéo (29) est assuré via le module spécialisé de traitement vidéo numérique (19).

3. Procédé selon la revendication 1, **caractérisé en ce que** le processus d'acquisition d'un nouveau logiciel est initié pendant une période de veille du récepteur.

4. Procédé selon la revendication 3, **caractérisé en ce que** la mise en service du récepteur est interdite pendant le transfert d'un nouveau logiciel dans la mémoire de programme d'application (26).

5. Procédé selon la revendication 4, **caractérisé en ce qu'**un message est affiché par le récepteur pendant le transfert d'un nouveau logiciel dans la mémoire de programme d'application (26).

6. Récepteur vidéo destiné à permettre la réception et le décodage de signaux vidéo et des données numériques envoyés par un émetteur de télévision, muni d'un microprocesseur (15) relié par un premier bus (27) à une mémoire de programme d'application de type ré-inscriptible (26), dans laquelle sont inscrites les instructions de base grâce auxquelles il peut fonctionner, des moyens de mise à jour pour remplacer les instructions de base dans leur ensemble par un logiciel neuf qui est envoyé par fraction successives, et de moyens pour vérifier les fractions de logiciel reçues une par une et pour les stoker provisoirement dans une mémoire vive jusqu'à ce que le nouveau logiciel soit complet et pour, lorsque le nouveau logiciel a été complètement reçu, le transférer dans la mémoire d'application, **caractérisé en ce que**, le récepteur comprenant un décodeur vidéo numérique (19) relié par un second bus (28) à une mémoire vidéo spécialisée associée (29), il est muni de moyens pour faire transiter des données entre le premier bus et le second bus, et ladite mémoire vive est constituée par la mémoire vidéo spécialisée associée au décodeur vidéo.

7. Téléviseur comprenant un récepteur vidéo selon la revendication 6.

## Patentansprüche

1. Verfahren zum Aktualisieren der Programm-Ausstattung eines Videoempfängers, versehen mit Mitteln zum Verarbeiten der Videosignale und der digitalen Daten, welche von einem Fernsehsender übertragen werden, und mit einem Mikroprozessor (15), über einen ersten Bus (27) mit einem Anwendungsprogrammspeicher vom überschreibbaren Typ (26) verbunden, in den die Basisanweisungen geschrieben werden, dank derer er funktionieren kann, wobei die besagten Mittel zur Verarbeitung von Videosignalen u. a. einen digitalen Bilddekoder (19) enthalten, über einen zweiten Bus (28) mit einem angegliederten spezialisierten Videospeicher (29) verbunden, Verfahren, demzufolge eine neue Programm-Ausstattung in aufeinander folgenden Bruchteilen empfangen wird, die empfangenen Programm-Ausstattungs-Bruchteile nacheinander von einem Mikroprozessor geprüft und in dem besagten angegliederten spezialisierten Videospeicher abgelegt werden, der als Direktzugriffsspeicher verwendet wird, um die Bruchteile der erhaltenen Programm-Ausstattung vorübergehend zu speichern, bis die neue Programm-Ausstattung komplett ist, und erst in diesem Zeitpunkt die neue Programm-Ausstattung in den überschreibbaren Anwendungsprogrammspeicher transferiert wird.

2. Verfahren nach Anspruch 1, **dadurch gekennzeichnet, dass** der Übergang der Daten zwischen dem Mikroprozessor (15) und dem Videospeicher (29) über das spezialisierte Modul zur digitalen Bildverarbeitung (19) versichert wird.

3. Verfahren nach Anspruch 1, **dadurch gekennzeichnet, dass** das Verfahren für die Aufnahme einer neuen Programm-Ausstattung während einer Bereitschaftsbetriebszeit des Empfängers eingeleitet wird.

4. Verfahren nach Anspruch 3, **dadurch gekennzeichnet, dass** die Inbetriebnahme des Empfängers während dem Transfer einer neuen Programm-Ausstattung in den Anwendungsprogrammspeicher (26) verboten ist.

5. Verfahren nach Anspruch 4, **dadurch gekennzeichnet, dass** während dem Transfer einer neuen Programm-Ausstattung in den Anwendungsprogrammspeicher (26) eine Meldung angezeigt wird.

6. Videoempfänger, um den Empfang und die Dekodierung von Videosignalen und digitalen Daten zu ermöglichen, welche von einem Fernsehsender übertragen werden, versehen mit einem Mikroprozessor (15), über einen ersten Bus (27) mit einem Anwendungsprogrammspeicher vom überschreibbaren Typ (26) verbunden, in den die Basisanweisungen geschrieben werden, dank derer er funktionieren kann, mit Aktualisierungmitteln für den Austausch der gesamten Basisanweisungen durch eine neue Programm-Ausstattung, die in aufeinander folgenden Bruchteilen gesendet wird, mit Mitteln zum Überprüfen der nacheinander empfangenen Programm-Ausstattungs-Bruchteile, um sie vorübergehend in einem Direktzugriffsspeicher abzulegen, bis die neue Programm-Ausstattung komplett ist, und um, wenn die neue Programm-Ausstattung vollständig empfangen wurde, sie in den Anwendungsprogrammspeicher zu transferieren, **dadurch gekennzeichnet, dass** der Empfänger einen digitalen Bilddekoder (19) enthält, der über einen zweiten Bus (28) mit einem angegliederten spezialisierten Videospeicher (29) verbunden und er mit Mitteln versehen ist, um Daten zwischen dem ersten und dem zweiten Bus zu übertragen, wobei der besagte Direktzugriffsspeicher aus dem dem Bilddekoder angegliederten spezialisierten Videospeicher gebildet wird.

7. Fernsehgerät mit einem Videoempfänger nach Anspruch 6.

## Claims

1. A method of updating software in a video receiver that comprises means for processing video signals and digital data sent by a television transmitter, and comprises a microprocessor (15) connected by a first bus (27) to a rewritable program memory (26) in which memory are written the basic instructions by which it can operate, said video signal processing means comprising inter alia a digital video decoder (19) connected by a second bus (28) to an associated specialized video memory (29), according to which method with new software being received in successive parts, the received software parts are verified one by one by the microprocessor and stored in a random-access memory which is used as a random-access memory for provisionally storing the received software parts until the new software is complete and, only at that moment, the new software is transferred to the rewritable memory.

2. A method as claimed in claim 1, **characterized in that** the transfer of the data between the microprocessor (15) and the video memory (29) is ensured via the specialized digital video processing module (19).

3. A method as claimed in one of the claims 1 or 2, **characterized in that** the process of acquiring new software is started during a standby period of the receiver.

4. The method as claimed in claim 3, **characterized in that** starting the receiver is forbidden during the transfer of new software to the program memory (26).

5. The method as claimed in claim 4, **characterized in that** a message is displayed by the receiver while new software is being transferred to the program memory (26).

6. A video receiver intended to permit the reception and decoding of video signals and digital data sent by a television transmitter, the receiver comprising a microprocessor (15) connected by a first bus (27) to a rewritable program memory (26) in which are written the basic instructions by which it can operate, updating means for replacing the basic instructions as a whole by new software which is sent in successive parts, and means for verifying the software parts received one by one and for storing them provisionally in a random access memory until the new software is complete, and for transferring the new software, when it has been completely received, to the program memory, **characterized in that** the receiver which comprises a digital video decoder (19) connected by a second bus (28) to an associated specialized video memory (29) has means for transporting data between the first bus and the second bus and said random access memory is formed by the random access memory associated to the video decoder.

7. A television set comprising a video receiver as claimed in claim 6.
